# EUROPÄISCHE PATENTSCHRIFT

(11) **EP 2 191 248 B1**
(45) Veröffentlichungstag und Bekanntmachung des Hinweises auf die Patenterteilung: **26.10.2011**
(21) Anmeldenummer: 08802065.6
(22) Anmeldetag: 12.09.2008
(51) Int. Cl.: G01K 1/14, G01K 1/20

(54) **ERMITTLUNG EINER INNENRAUMTEMPERATUR IN EINEM KRAFTFAHRZEUG**
SENSOR ARRANGEMENT FOR DETERMINING AN INSIDE TEMPERATURE IN A MOTOR VEHICLE
DISPOSITIF DE CAPTEUR POUR LA MESURE D'UNE TEMPERATURE INTERIEURE DANS UN VEHICULE A MOTEUR

(30) Priorität: 12.09.2007 DE 102007043424
(43) Veröffentlichungstag der Anmeldung: 02.06.2010
(73) Patentinhaber: Preh GmbH, 97616 Bad Neustadt a. d. Saale (DE)
(72) Erfinder: REGENSBURGER, Johann, 91795 Dollnstein (DE); BAUER, Georg, 97708 Bad Bocklet (DE); KRAMLICH, Andreas, 97424 Schweinfurt (DE); REISER, Michael, 96450 Coburg (DE); GUCK, Claudia, 97640 Mittelstreu (DE)
(74) Vertreter: Bauer Vorberg Kayser Patentanwälte
(86) Internationale Anmeldenummer: PCT/EP2008/007505
(87) Internationale Veröffentlichungsnummer: WO 2009/033698

(56) Entgegenhaltungen:
- WO-A-2007/115652
- DE-B3- 10 251 128
- DE-C1- 19 728 803

## Beschreibung

Die Erfindung betrifft ein Klimabediengerät, umfassend eine Sensoranordnung für die Ermittlung einer Innenraumtemperatur in einem Kraftfahrzeug nach dem Oberbegriff des Patentanspruchs 1.

Eine derartige Sensoranordnung ist aus der DE 102 51 128 B3 der Anmelderin vorbekannt.

In Kraftfahrzeugen werden, zur Einhaltung einer voreinstellbaren Temperatur, geregelte Klimaanlagen eingesetzt. Zur Erfassung des Ist-Wertes der Innenraumtemperatur werden hierbei verschiedenste Sensoren eingesetzt. Vielfach sind die Sensoren in die Klimabediengeräte der Kraftfahrzeuge, zur Bildung einer in sich geschlossenen Einheit, integriert. Zur Erfassung des tatsächlichen Ist-Wertes müssen hierzu unterschiedliche Einflüsse auf eine Sensoranordnung zur Erfassung der Ist-Temperatur berücksichtigt werden. So kann insbesondere eine unmittelbare Sonneneinstrahlung auf die Sensoranordnung den Messwert verfälschen, was wiederum zu einer ungenügenden Regulierung der Innenraumtemperatur führt. Neben der Sonneneinstrahlung ist zum Beispiel die Luftzirkulation, die Temperatur peripherer Geräte, wie auch die Körpertemperatur des Bedieners, etc. zu berücksichtigen und aus dem Messwert zur Erfassung der Innenraumtemperatur zu eliminieren.

Eine Sensoranordnung zur Erfassung der Ist-Raum-Temperatur ist in der EP 1 415 829 B1 offenbart. Beschrieben ist eine Sensoranordnung zur Ermittlung der Innenraumtemperatur, wobei die Sensoranordnung an einer Aussenseite eines Klimabedienteils einer Klimaanlage angebracht ist. Die Sensoranordnung besitzt einen Temperatursensor, der auf einer Rückseite einer Vorderwand der Sensoranordnung mit gutem thermischen Kontakt zur Vorderwand befestigt ist. Das Sensorgehäuse ist rückseitig durch ein wannenförmiges Kunststoffgehäuse zum Innenraum des Bedienteils geschlossen.

Aus der nicht vorveröffentlichten W02007/115652 der Anmelderin, die ein Dokument im Sinne von Art. 54(3) EPÜ ist, ist eine Sensoranordnung für die Ermittlung einer Innenraumtemperatur in einem Kraftfahrzeug ersichtlich, die zumindest ein Teil eines Klimabedienteils ist, bestehend aus einem Gehäuse mit zumindest einer Vorderwand und einer Rückwand, wobei das Gehäuse mit einem wärmeisolierenden Mittel gefüllt ist, einem ersten auf einer Rückseite der Vorderwand befestigten Temperatursensor und einem zweiten auf einer Rückseite der Vorderwand zugewandten Innenseite der Rückwand befestigten Temperatursensor, wobei die Vorderwand ein Teil einer Blende im Kraftfahrzeug ist. Hierbei erfasst ein erster Sensor, der hinter einer thermisch leitfähigen Vorderwand befestigt ist, die Temperatur des Innenraums des Kraftfahrzeugs und ein zweiter im hinteren Teil der Sensoranordnung befestigter Temperatursensor misst die rückseitige Wärmestrahlung auf die Sensoranordnung. Damit die beiden Temperatursensoren unabhängig voneinander arbeiten, ist zwischen den Sensoren, im Inneren des Gehäuses der Sensoranordnung ein wärmeisolierendes Mittel eingebracht. Hierdurch wird gewährleistet, dass die auf die Temperatursensoren wirkenden Wärmequellen unabhängig voneinander auswertbar sind. Der dem Bediener zugewandte, hinter der Vorderwand befestigte Temperatursensor ist an einer mit einer guten thermischen Leitfähigkeit ausgestatteten Vorderwand befestigt. Zur Integration in das Klimabedienteil ist es bekannt, die Oberfläche der Vorderwand zu lackieren.

Die Aufgabe der Erfindung ist es ein Klimabediengerät, umfassend eine Sensoranordnung, bereit zu stellen, die konstruktiv einfach aufgebaut ist, die kostengünstig zu realisieren ist und die unabhängig von der Positionierung des Klimabediengerätes im Kraftfahrzeug einbaubar ist.

Die Aufgabe der Erfindung wird gelöst durch die Merkmale des Patentanspruchs 1.

Durch den erfindungsgemässen Aufbau einer Sensoranordnung ist nun die Möglichkeit geschaffen, die Sensoranordnung an eine beliebige Position innerhalb des Klimabedienteils, wie aber auch an jeder anderen Position, wie beispielsweise im Armaturenbrett, der Mittelkonsole oder den Verkleidungen anzubringen. Durch die Anordnung des Sensors hinter einer Blende ist die Möglichkeit geschaffen, die Blende an das Interieur des Kraftfahrzeugs anzupassen und somit die Sensoranordnung an jede beliebige Position und vorteilhafter Weise auch außerhalb der Wärmestrahlung peripherer Geräte in das Kraftfahrzeug einzubauen. Im Gegensatz zum Stand der Technik ist die Anordnung nicht an geometrische und/oder designtechnische und/oder ästhetische Positionen im Klimabedienteil gebunden, so dass ein größerer Spielraum bei der Gestaltung des Klimabedienteils gegeben ist. Dies wirkt sich einerseits auf die design-technische Anordnung im Klimabedienteil aus, wie auch darauf, dass die Sensoranordnung an eine für die Messung optimale Position im Kraftfahrzeug anordbar ist.

Es ist somit der Vorteil geschaffen, dass die Position im Kraftfahrzeug zur Messung der Innenraumtemperatur einsetzbar ist, die zur optimalen Messung der Innenraumtemperatur geeignet ist. So ist es beispielsweise vorstellbar, dass das Klimabediengerät aus Bedienungsgründen derart angeordnet ist, dass es einer unmittelbaren Sonneneinstrahlung ausgesetzt ist. Hier ergibt sich nun ein erfindungswesentlicher Vorteil, nämlich der, dass die Sensoranordnung in einen Bereich verschoben werden kann, der keiner unmittelbaren Sonneneinstrahlung unterliegt.

Ein weiterer Vorteil ergibt sich dahingehend, dass mit einer reduzierten Anzahl von Bauteilen gearbeitet werden kann. Sind die Sensoranordnungen gemäß dem Stand der Technik darauf angewiesen, dass die aus einer guten thermischen Leitfähigkeit bestehenden Vorderwände möglichst unabhängig vom Interieur, wie beispielsweise der Blende oder dem Armaturenbrett, angeordnet sind, so ist die erfindungsgemäße Sensoranordnung durch den Wegfall einer separaten frei schwebenden Vorderwand mit sehr viel geringerem Aufwand herzustellen, was sich wiederum günstig auf die Herstellungskosten auswirkt.

Weiterhin ergibt sich der Vorteil, dass die Aufteilung der Bauteile des Klimabediengerätes, zu dem die Sensoranordnung gehört, erleichtert wird. Die Sensoranordnung ist nun nicht mehr an eine designerische Vorgabe gebunden, sondern ist an dem Ort im Klimabedienteil einbaubar, der in Abhängigkeit weiterer Bauteile des Klimabedienteiles eine Möglichkeit der Anordnung eröffnet. Diese Vorteile in Bezug auf den Bauraum sind wiederum vorteilhaft bei der Konstruktion, so dass sich hierbei ebenfalls ein positiver Effekt bei den Herstellungskosten herausstellt.

Nachfolgend wird die Erfindung anhand des Standes der Technik und eines Ausführungsbeispiels näher erläutert.
Es zeigt:
- Figur 1: den Schnitt durch ein Klimabediengerät oder eine Instrumententafel in einem Kraftfahrzeug, durch eine Sensoranordnung und
- Figur 2: einen Schnitt durch eine erfindungsgemäß aufgebaute Sensoranordnung.

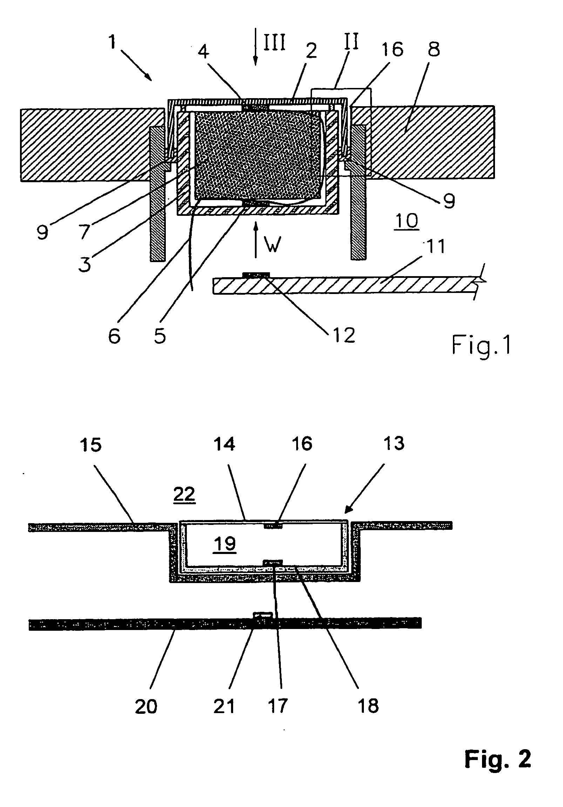

Die Figur 1 zeigt eine Sensoranordnung 1, gemäß der zum Prioritätsdatum nach nicht veröffentlichten DE 10 2007 009 672, als Oberflächensensor 1, mit einer Vorderwand 2, die Teil des Gehäuses des Oberflächensensors 1 ist, eine vornehmlich aus Kunststoff gefertigte Rückwand 3 als Gehäusehinterteil, einen ersten Temperatursensor 4 sowie einen zweiten Temperatursensor 5, eine flexible Leitung 6, wobei die flexible Leitung 6 mit den beiden Temperatursensoren 4, 5 verbunden ist und ein im Gehäuse 2, 3 befindliches wärmeisolierendes Mittel 7, das einerseits das Gehäuse 2, 3 ausfüllt und andererseits zwischen den Temperatursensoren 4, 5 isolierend wirkt. Der Oberflächensensor 1 ist bündig oder nahezu bündig in eine Blende 8 eines Bediengerätes einer Klimaanlage integriert. Die Sensoranordnung 1 ist mittels Führungsrippen 9 in der Blende 8 gehalten. Hinter dem Oberflächensensor 1 im Inneren des Klimabediengerätes ist eine Leiterplatte 11 dargestellt. Auf der Leiterplatte 11 ist ein weiterer Temperatursensor 12 befestigt. Auf diesen gattungsbildenden Stand der Technik wird direkt Bezug genommen, wobei darauf hingewiesen wird, dass der Offenbarungsgehalt des Standes der Technik den Offenbarungsgehalt der Erfindung mit umfasst.

Ausgehend von diesem Stand der Technik weist die Sensoranordnung 13 gemäß der Erfindung eine Vorderwand 14 auf, die einem Teil einer Blende 15 des Interieurs des Kraftfahrzeugs entspricht. Hierbei ist die Vorderwand 14 als Teil der Blende 15 ebenfalls aus Kunststoff gefertigt. Die Vorderwand 14 ist beispielsweise als Kunststofffolie ausbildbar, um einen guten Wärmetransport durch die Vorderwand 14 zu gewährleisten. Eine erfindungsgemäß ausgebildete Sensoranordnung 13 ist in der Figur 2 dargestellt. Die Sensoranordnung 13 besitzt einen ersten Temperatursensor 16, der an der Rückseite der Vorderwand 14 befestigt ist. Ein weiterer Temperatursensor 17 ist im Inneren an einer der Vorderwand zugewandten Seite der Rückwand 18 angeordnet. Im Inneren 19 der Sensoranordnung 13 ist ein wärmeisolierendes Mittel einbringbar. Die Blende 15 umschließt in diesem Beispiel die Sensoranordnung 13 formschlüssig. Hinter der Sensoranordnung 13 ist eine Leiterplatte 20 angeordnet, auf der wiederum ein weiterer Temperatursensor 21 als Umgebungssensor 21 verbaut ist. Der Umgebungssensor 21 misst hierbei die von der Leiterplatte 20 und / oder peripherer Bauteile ausgesandte Wärmestrahlung, wie auch die Erwärmung der Leiterplatte 20. Die mittels des Umgebungssensors 21 erfasste Temperatur dient hierbei als Messwert für ein Energiebilanzmodell zur Berechnung der Innenraumtemperatur. Bei den Temperatursensoren 16, 17, 21 handelt es sich vornehmlich um NTC-Widerstände.

Bei Störungen, wie beispielsweise Sonnenschein, einem Finger auf der Sensoranordnung 13, kann durch einen Vergleich mit einer Energiebilanz und eine entsprechende Logik der Messwert auf Plausibilität überprüft werden und gegebenenfalls ersatzweise die theoretisch berechnete Temperatur als Grundlage für den Temperatur-Ist-Wert für die Klimaregelung herangezogen werden. Hierbei berechnet das Energiebilanzmodell die Innenraumtemperatur aus allen nötigen Sensor- und Betriebswerten, die im Steuergerät und im Bordnetz des Kraftfahrzeuges zur Verfügung stehen. Derartige Betriebswerte sind beispielsweise die Außentemperatur, die Ausblastemperatur aus den Lüftungsöffnungen, die Luftverteilung, die Luftmenge, ein Sonnensensor et cetera.

Ein wesentlicher Vorteil der Erfindung ergibt sich dann, wenn die Vorderwand 14 einteilig mit der Blende 15 ausgebildet ist. Danach ist es möglich, die Sensoranordnung 13 beliebig im Klimabediengerät, in der Blende oder im Interieur des Kraftfahrzeuges zu integrieren. Die Sensoroberfläche 14 ist thermisch isoliert zur umgebenden Struktur aufgebaut, jedoch gut wärmeleitend zum Fahrzeuginnenraum 22 gestaltet. Dies kann in Form einer dünnen Kunststofffolie 14 gestaltet sein. Hierbei ist es erfindungsgemäß ebenfalls vorstellbar, den Kunststoff zumindest im Bereich des Temperatursensors 16 wärmeleitend zu gestalten. Dies kann beispielsweise dadurch erfolgen, dass partiell Wärme leitende Partikel aus Aluminium oder Kupfer in den Kunststoff der Vorderwand 14 eingebracht werden. Ein bevorzugt eingesetzter Kunststoff ist Polycarbonat (PC) und Polymethylmetacrylat (PMMA). Die Wandstärke im Bereich des Temperatursensors 16 zum Innenraum des Kraftfahrzeuges beträgt hierbei cirka 0,6 mm, wobei eine Wandstärke der Vorderwand 14 zwischen 0,2 mm und 2 mm, vorzugsweise zwischen 0,4 mm und 1,2 mm und noch bevorzugter zwischen 0,6 mm und 0,8 mm auswählbar ist.

## Patentansprüche

1. Klimabediengerät, umfassend eine Sensoranordnung für die Ermittlung einer innenraumtemperatur in einem Kraftfahrzeug, die zumindest ein Teil des Klimabediengeräts ist, bestehend aus einem Gehäuse mit zumindest einer Vorderwand (14) und einer Rückwand (18), wobei das Gehäuse mit einem wärmeisolierenden Mittel gefüllt ist, einem ersten auf einer Rückseite der Vorderwand (14) befestigten Temperatursensor (16) und' einem, zweiten Temperatursensor (17), wobei die Vorderwand (14) ein Teil einer Blende (15) im Kraftfahrzeug ist, **dadurch gekennzeichnet, dass** der zweite Temperatursensor (17) auf eine der Rückseite der Vorderwand (14) zugewandten Innenseite der Rückwand befestigt ist, dass die Vorderwand eine derartige Wandstärke aufweist, dass ein Wärmetransport durch die Vorderwand gewährleistet ist, und dass der Werkstoff der Vorderwand (14) zumindest im Bereich des ersten Temperatursensors (16) eine die Wärmeleitung unterstützend Zugabe enthält.

2. Klimabediengerät nach Anspruch 1 , **dadurch gekennzeichnet, dass** die Blende (15) Teil des Klimabediengerätes ist.

3. Klimabediengerät nach einem der Ansprüche 1 und 2, **dadurch gekennzeichnet, dass** die Vorderwand (14) aus einem thermoplastischen Kunststoff, insbesondere PC, PMMA, gefertigt ist.

4. Klimabediengerät nach einem der Ansprüche 1 bis 3, **dadurch gekennzeichnet, dass** mindestens ein weiterer Sensor (21) in einem Bereich der Rückwand (18) des Gehäuses der Sensoranordnung (13) befestigt ist, so dass eine Wärmestrahlung auf das Gehäuse erfassbar ist.

5. Klimabediengerät nach Anspruch 4, **dadurch gekennzeichnet, dass** eine Leiterplatte (20) im Inneren des Klimabediengeräts und zumindest bereichsweise hinter der Sensoranordnung (13) befestigt ist und dass der weitere Temperatursensor (21) auf der Leiterplatte (20) befestigt ist.

6. Klimabediengerät nach einem der Ansprüche 2 bis 5 **dadurch gekennzeichnet. dass** die Blende (15) im Bereich der Sensoranordnung (13) eine dem Klimabediengerät entsprechende Oberfläche aufweist.

## Claims

1. Climate control device, comprising a sensor arrangement for determining an inside temperature in a motor vehicle which is at least a part of the climate control device, consisting of a housing with at least a front wall (14) and a rear wall (18), wherein the housing is filled with a heat-Insulating material, a first temperature sensor (16) attached to a rear of the front wall (14) and a second temperature sensor (17), the front wall (14) being a part of a panel (15) in the motor vehicle, **characterised In that** the second temperature sensor (17) is attached to an inner side of the rear wall, said inner side facing a rear of the front wall (14), that the front wall has such a wall thickness that a heat transfer through the front wall is ensured, and that the material of the front wall (14), at least in the area of the first temperature sensor (16), contains an additive supporting heat-conduction.

2. Climate control device according to claim 1, **characterised In that** the panel (15) is part of the climate control device.

3. Climate control device according to any one of the claims 1 and 2, **characterised in that** the front wall (14) is made from a thermoplastic material, in particular PC, PMMA.

4. Climate control device according to any one of the claims 1 to 3, **characterised in that** at least one additional sensor (21) is attached in an area of the rear wall (18) of the housing of the sensor arrangement (13), so that a heat radiation on the housing can be detected.

5. Climate control device according to claim 4, **characterised in that** a circuit board (20) is attached inside the climate control device and, at least in some areas, behind the sensor arrangement (13), and that the additional temperature sensor (21) is attached to the circuit board (20).

6. Climate control device according to any one of the claims 2 to 5, **characterised in that** the panel (15), in the area of the sensor arrangement (13), has a surface corresponding to the climate control device.

## Revendications

1. Appareil de commande de climatisation, comprenant un ensemble de capteurs pour déterminer une température d'intérieur dans un véhicule automobile, qui constitue au moins une partie dudit appareil de commande de climatisation, constitué par un boîtier ayant au moins une paroi avant (14) et une paroi arrière (18), ledit boîtier étant rempli d'un isolant thermique, par un premier capteur de température (16) qui est fixé sur une face arrière de la paroi avant (14) ainsi que par un deuxième capteur de température (17), ladite paroi avant (14) constituant une partie d'une cache (15) dans le véhicule automobile, **caractérisé par le fait que** ledit deuxième capteur de température (17) est fixé sur une face interne de la paroi arrière, qui montre en direction de la face arrière de la paroi avant (14), que la paroi avant présente une épaisseur de paroi telle qu'un transport de chaleur à travers la paroi avant soit garanti, et que le matériau de la paroi avant (14) comprend, au moins au niveau dudit premier capteur de température (16), un supplément supportant la conduction de la chaleur.

2. Appareil de commande de climatisation selon la revendication 1, **caractérisé par le fait que** ladite cache (15) fait partie de l'appareil de commande de climatisation.

3. Appareil de commande de climatisation selon l'une quelconque des revendications 1 et 2, **caractérisé par le fait que** la paroi avant (14) est réalisée dans une matière plastique thermoplastique, en particulier en PC, en PMMA.

4. Appareil de commande de climatisation selon l'une quelconque des revendications 1 à 3, **caractérisé par le fait qu'**au moins un autre capteur (21) est fixé dans une zone de la paroi arrière (18) du boîtier dudit ensemble de capteurs (13) de manière à ce qu'un rayonnement thermique en direction dudit boîtier puisse être détecté.

5. Appareil de commande de climatisation selon la revendication 4, **caractérisé par le fait qu'**une carte de circuits imprimés (20) est fixée dans le volume intérieur de l'appareil de commande de climatisation et, au moins par zones, derrière ledit ensemble de capteurs (13) et que ledit autre capteur de température (21) est fixé sur ladite carte de circuits imprimés (20).

6. Appareil de commande de climatisation selon l'une quelconque des revendications 2 à 5, **caractérisé par le fait que** ladite cache (15) présente, au niveau dudit ensemble de capteurs (13), une surface correspondant à l'appareil de commande de climatisation.
